# FASCICULE DE BREVET EUROPEEN

(11) **EP 2 033 835 B1**
(45) Date de publication et mention de la délivrance du brevet: **24.04.2019**
(21) Numéro de dépôt: 08163386.9
(22) Date de dépôt: 01.09.2008
(51) Int. Cl.: B60L 7/06, H02P 3/22, H02P 6/24, B60L 3/00, B60L 7/00, B60L 7/22

(54) **DISPOSITIF SÉCURITAIRE DE DÉTECTION D'INSUFFISANCE DE FREINAGE ÉLECTRIQUE ET DE COMMUTATION SUR UN FREIN SÉCURITAIRE**
SICHERHEITSVORRICHTUNG ZUR ERFASSUNG VON MÄNGELN EINER ELEKTRISCHEN BREMSE UND ZUR WEITERSCHALTUNG AUF EINE SICHERHEITSBREMSE
SECURE DEVICE FOR DETECTING ELECTRIC BRAKING INSUFFICIENCY AND SWITCHING TO A SECURE BRAKE

(30) Priorité: 04.09.2007 FR 0757341
(43) Date de publication de la demande: 11.03.2009
(73) Titulaire: ALSTOM Transport Technologies, 93400 Saint-Ouen (FR)
(72) Inventeur: Jobard, Thierry, 69004 Lyon (FR)
(74) Mandataire: Lavoix

(56) Documents cités:
- WO-A-03/049256
- JP-A- 8 149 870
- US-A1- 2007 090 783
- US-B1- 6 445 879

## Description

L'invention se rapporte à un dispositif de détection d'insuffisance de freinage électrique et de commutation sur un frein sécuritaire. Il est destiné à un véhicule à motorisation électrique, par exemple un véhicule ferroviaire.

Un freinage sécuritaire garantit la réalisation de l'effort de freinage souhaité de manière extrêmement fiable.

On distingue dans le domaine ferroviaire principalement deux types de freinage : le freinage de service et le freinage d'urgence.
- Le freinage de service est celui qui est le plus couramment utilisé en exploitation. Il est modulable entre une valeur minimale d'effort proche de 0 et une valeur maximale d'effort. Il peut se décomposer lui-même en plusieurs modes, selon les trains : frein purement électrique, frein purement mécanique ou frein conjugué électrique et mécanique. Il sert à effectuer tous les arrêts et ralentissements « normaux » du train, ainsi que les freinages de maintien dans les pentes. Mais il n'est pas sécuritaire, en ce sens qu'il met en oeuvre un grand nombre de composants électriques, électroniques, mécaniques, pneumatiques ou hydrauliques qui peuvent tomber en panne et donc entraîner un effort de freinage différent de celui souhaité, voire même, avec les nouvelles chaînes de traction à commutation traction / freinage statique, un effort de traction.
- Le freinage d'urgence est utilisé seulement, comme son nom l'indique, en cas d'urgence. Ce cas d'urgence peut être motivé, soit par une situation d'urgence extérieure, soit par une panne du frein de service. Le but de ce frein est d'arrêter le train le plus vite et le plus sûrement possible. Ce frein n'est pas modulable, mais est sécuritaire, c'est-à-dire que sa probabilité de défaillance doit être extrêmement basse. Ce frein doit donc utiliser le moins de composants possible. Généralement il est purement mécanique, mais ceci nécessite un dimensionnement du frein mécanique en conséquence, ce qui peut s'avérer prohibitif en coût ou en masse, notamment sur un train à grande vitesse où les énergies de freinage à dissiper sont importantes. C'est pourquoi il peut être très intéressant de réaliser un freinage électrique de sécurité.

Un dispositif de freinage électrique sécuritaire est décrit dans la demande de brevet intitulé « Dispositif de freinage sécuritaire à ensemble résistif bipolaire avec moteur à aimants permanents » au nom d'Alstom Transport. Mais ce dispositif a un inconvénient : sa caractéristique effort / vitesse ne dépend que des caractéristiques du moteur et de la valeur de la résistance de freinage choisie, elle n'est donc pas ajustable, en particulier elle peut conduire à des efforts excessifs à haute vitesse qui solliciteraient trop l'adhérence ou au contraire à des efforts trop faibles à basse vitesse. Un dispositif pour améliorer cette caractéristique effort / vitesse est décrit dans la demande de brevet intitulé « Dispositif de freinage électrique sécuritaire avec moteur à aimants permanents et régulation du couple de freinage » au nom d'Alstom Transport, mais il nécessite d'ajouter un matériel supplémentaire.

JP 08 149870 A décrit un système de freinage commutant en cas d'urgence sur un frein sécuritaire de type rhéostatique.

US 6,445,879 B1 décrit un système de freinage de machine à laver basé sur la régulation d'un couple freinage en fonction de l'excédent d'énergie renvoyé par un moteur et mesurée par une capacité de ligne branchée sur une ligne d'alimentation du moteur.

US 2007/0907831 A1 décrit un système de freinage agissant par la mise en court-circuit des bornes d'un stator d'une machine synchrone.

Le dispositif décrit dans cette invention a pour but de permettre d'utiliser le frein électrique de service en freinage d'urgence et de n'utiliser le frein de sécurité qu'en cas de défaillance du frein électrique de service, ce qui a pour avantages :
- de profiter de toutes les possibilités de réglage dynamique du frein de service en situation d'urgence, de façon à exploiter au mieux l'adhérence roue / rail disponible,
- de moins solliciter le frein de sécurité en ne l'utilisant qu'en cas de défaillance du frein de service.

A cet effet, l'invention a pour objet un système de freinage sécuritaire selon la revendication 1.

Suivant des modes particuliers de réalisation, le frein sécuritaire est selon l'une quelconque des revendications 2 à 15.

L'invention a également pour objet un procédé de freinage sécuritaire selon la revendication 16.

Suivant des modes particuliers de réalisation, le procédé de freinage sécuritaire est selon la revendication 17.

L'invention sera mieux comprise à la lecture de la description des formes de réalisation qui vont suivre, données uniquement à titre d'exemple et faites en se référant aux dessins sur lesquels :
- la Figure 1 est une vue schématique d'une première forme de réalisation d'un système de freinage comprenant un premier frein électrique de service, non sécuritaire, et un deuxième frein mécanique, sécuritaire ;
- la Figure 2 est une vue schématique d'une deuxième forme de réalisation d'un système de freinage, ici tout électrique, comprenant un premier frein électrique de service non sécuritaire et un deuxième frein électrique sécuritaire ;
- la Figure 3 est une vue schématique d'une troisième forme de réalisation d'un système de freinage, ici tout électrique, comprenant un premier frein électrique de service, non sécuritaire, et un deuxième frein électrique sécuritaire;
- la Figure 4 est une vue schématique d'une variante de la première forme de réalisation décrite dans la Figure 1 ;
- la Figure 5 est une vue schématique d'une variante de la deuxième forme de réalisation de la Figure 2 ;
- la Figure 6 est une vue schématique d'une variante de la troisième forme de réalisation décrite dans la Figure 3 ;
- la Figure 7 est une courbe de courant fonction de la vitesse de rotation d'un moteur de traction à partir de laquelle est déterminé un seuil de déclenchement d'un relais de courant.

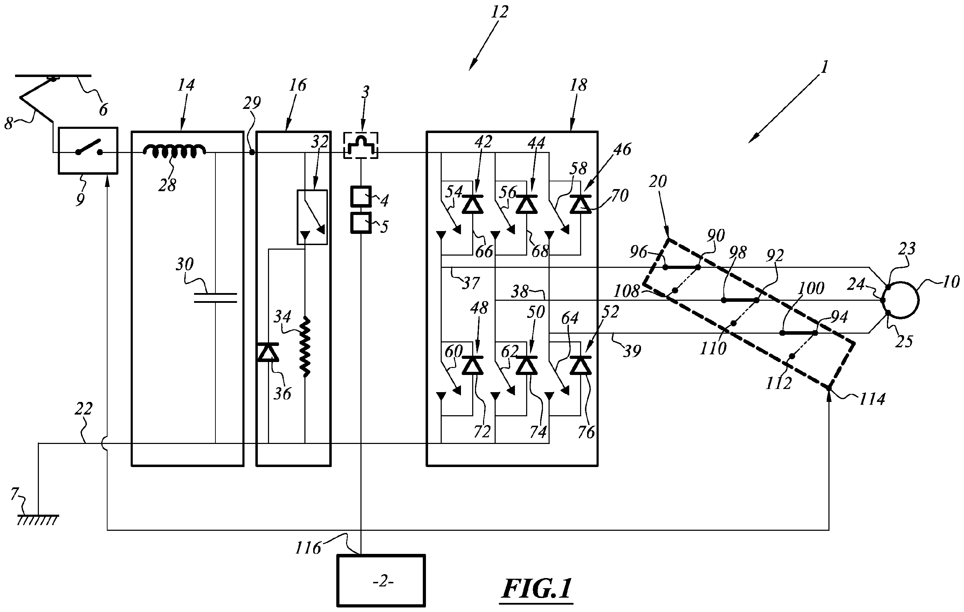

La Figure 1 représente une première forme de réalisation d'un système de freinage dit sécuritaire associé à une chaîne de traction électrique 1 d'un véhicule ferroviaire.

Le système de freinage comprend un premier frein électrique de service intégré dans la chaîne de traction électrique 1 et un deuxième frein 2 sécuritaire, ici mécanique.

Le système de freinage comprend également un dispositif de surveillance 3 de la performance de freinage du premier frein par des données de mesure de l'intensité d'un courant, un dispositif de détection 4 apte à fournir la décision de commuter depuis le premier frein sur le deuxième frein à partir du franchissement d'une valeur de seuil prédéterminée par les données de mesure de l'intensité, et un dispositif d'émission 5 d'un ordre de commutation.

La chaîne de traction 1 est alimentée à l'aide d'une ligne caténaire (ou d'un troisième rail) 6 sous haute tension référencée par une masse 7 liée à la terre.

La chaîne de traction électrique 1 comprend un pantographe (ou frotteur) 8 de captage de l'énergie électrique depuis la ligne caténaire (ou le troisième rail) 6 suivi d'un disjoncteur 9 de ligne servant d'interrupteur / contacteur principal entre la chaîne de traction 1 et la ligne caténaire (ou le troisième rail) 6.

La chaîne de traction 1 comprend également une machine électromécanique tournante 10 apte à être alimentée par un convertisseur électronique de puissance 12.

Le convertisseur électronique de puissance 12 comprend en cascade depuis le disjoncteur 9 vers la machine électromécanique 10 un filtre de ligne 14, un hacheur de freinage rhéostatique 16 et un onduleur de traction 18, ici à sortie triphasée, apte à alimenter la machine électromécanique 10 au travers d'un commutateur électromécanique 20 de raccordement.

L'ensemble des éléments de la chaîne de traction 1 est raccordé à la masse commune 7 au travers d'une ligne de retour de masse 22.

La machine électromécanique tournante 10 comprend un stator à alimentation ici alternative triphasée pourvu de bornes électriques d'entrée 23, 24, 25 et un rotor dont l'excitation est fournie par un aimant permanent.

En mode de traction électrique, la machine électromécanique 10 fonctionne en moteur tandis qu'en mode de freinage électrique la machine fonctionne en génératrice de tension.

Le premier frein électrique de service comprend des composants de la chaîne de traction 1, notamment la machine électromécanique tournante 10, l'onduleur 18, le hacheur de freinage rhéostatique 16 et le filtre de ligne 14.

Le filtre de ligne 14 comprend ici une structure « LC » classique formée d'une part d'une inductance de ligne 28 montée en série entre le disjoncteur 9 et une entrée de ligne 29 du hacheur 16, et d'autre part d'un condensateur 30 branchée électriquement en parallèle près de l'entrée 29 du hacheur 16.

Le hacheur de freinage rhéostatique 16 comprend un transistor de puissance 32 de type IGBT (Insulated Gâte Biopolar Transistor ou transistor bipolaire à grille isolée) par exemple servant de régulateur, connecté en série à une résistance de freinage rhéostatique 34.

Le hacheur 16 comprend également une diode de roue libre 36, branchée en parallèle sur la résistance de freinage 34.

L'onduleur 18 comprend trois lignes de sorties alternatives triphasées 37, 38, 39 chacune apte à être connectée respectivement à une borne électrique d'entrée 23, 24, 25 de phase stator du moteur 10 par une connexion réalisée à l'aide du commutateur électromécanique 20.

L'onduleur 18 a une structure classique à 6 interrupteurs électroniques de puissance 42, 44, 46, 48, 48, 50, 52 connectés en trois phases raccordées entre la sortie du filtre d'entrée 14 et la ligne de retour 22.

Chaque interrupteur électronique de puissance 42, 44, 46, 48, 50, 52 comprend respectivement un transistor de puissance, de type IGBT par exemple, 54, 56, 58, 60, 62, 64, commandable en état passant / non passant pour un courant de commande, chaque transistor de puissance étant associé à une diode de roue libre 66, 68, 70, 72, 74 et 76 montée en anti-parallèle sur ce dernier. Ici, sur la figure 1, la flèche de chaque transistor de puissance représente le sens de passage du courant lorsque ce transistor est passant.

Chaque interrupteur de puissance 42, 44, 46 est respectivement associé à un interrupteur de puissance 48, 50, 52, la sortie d'un des premiers étant reliée à l'entrée d'un des seconds et formant une sortie de l'onduleur, chaque sortie étant reliée à une ligne de sortie de l'onduleur respectivement 37, 38, 39.

Les circuits de commande des cellules de commutation ne sont pas représentés sur la figure 1 et sont supposés aptes à fournir un fonctionnement synchrone de traction au moteur 10.

Le commutateur électromécanique 20 comprend un ensemble de trois plots d'entrée 90, 92 et 94, respectivement connectés aux bornes électriques d'entrée 23, 24 et 25 des phases stator du moteur 10.

Le commutateur électromécanique 20 comprend également un premier groupe de plots de sortie 96, 98, 100 connectés respectivement aux lignes de sortie 37, 38, 39 de l'onduleur 18.

Le commutateur électromécanique 20 comprend également un deuxième groupe de plots de sortie 108, 110 et 112 isolés électriquement aptes à être connectés respectivement aux plots d'entrées 90, 92 et 94 pour isoler le moteur de l'onduleur 18.

Le commutateur électromécanique 20 comprend une entrée de commande 114 apte à recevoir une commande de commutation permettant de commuter des contacteurs formant connexions entre les plots d'entrées et les plots de sortie d'un groupe à l'autre.

Le commutateur électromécanique 20 présente un haut degré de fiabilité et donc de sécurité.

Ici, l'ensemble constitué par le dispositif de surveillance 3, le dispositif de détection 4 et le dispositif d'émission 5, est réalisé par un seul composant : un relais d'intensité.

En variante, les dispositifs 3, 4 et 5 forment un ensemble discret de trois composants séparés.

Le dispositif de surveillance 3 est branché ici, figure 1, entre l'onduleur 18 et le hacheur de frein rhéostatique 16.

Le dispositif d'émission 5 émet en sortie un signal d'ordre de commutation lorsque le courant mesuré par le relais d'intensité se trouve en dessous d'une valeur de seuil prédéterminée.

La sortie d'état enclenché / déclenché du dispositif d'émission 5 est reliée à une entrée de commande d'activation 116 du frein mécanique 2 et à l'entrée de commande 114 du relais électromécanique 20, apte à connecter / déconnecter le moteur 10 de l'onduleur 18.

En fonctionnement en traction, la chaîne de traction 1 décrite dans la figure 1 est configurée pour alimenter en courant le moteur 10 par la ligne caténaire 6 via l'onduleur 18.

Le convertisseur électronique de puissance 12 met en oeuvre une configuration d'onduleur alimenté en courant continu, le disjoncteur de ligne 9 étant alors fermé et le transistor du hacheur 16 étant alors ouvert.

Le commutateur électromécanique 20 est configuré dans ce cas de sorte à assurer la connexion des lignes de sortie 37, 38, 39 de l'onduleur 18 aux entrées d'alimentation 23, 24, 25 du stator du moteur.

Lors d'un freinage de service, le commutateur électromécanique 20 garde le même état que lors de la traction.

L'onduleur 18 est configuré pour fonctionner en mode redresseur et le hacheur 16 sert à limiter la puissance de freinage renvoyée sur la ligne 6 à la puissance maximale qu'elle peut recevoir, l'éventuel surplus de la puissance de freinage étant dissipé dans la résistance 34.

Ce mode de fonctionnement est le mode de fonctionnement classique dit conjugué récupération / rhéostatique.

Il est aussi possible de fonctionner en mode de freinage rhéostatique pur. Dans ce cas, le disjoncteur de ligne 9 est ouvert, l'onduleur fonctionne également en mode redresseur et débite dans la résistance de freinage rhéostatique 34 un courant redressé fonction de la valeur de la résistance rhéostatique 34 du hacheur 16 et de la tension de sortie de l'onduleur 18. Ce mode de fonctionnement est souvent choisi lorsque le frein électrique est utilisé en freinage d'urgence, car l'ouverture du disjoncteur garantit que le couple réalisé par le moteur ne pourra pas être positif, c'est-à-dire de traction.

Même dans ce mode rhéostatique pur, le couple de freinage est régulé de manière active par l'onduleur 18 fonctionnant en redresseur, l'interrupteur électronique 32 du hacheur 16 étant maintenu en conduction permanente ou quasi-permanente, du fait qu'aucune énergie ne peut être renvoyée sur la ligne 6 puisque le disjoncteur 9 est ouvert.

Ainsi, quel que soit le mode de fonctionnement de frein électrique de service utilisé en freinage d'urgence (mode conjugué récupération / rhéostatique ou mode rhéostatique pur), le couple de freinage peut être régulé de manière dynamique en fonction de la vitesse des roues et de l'adhérence roue / rail disponible. Ce frein aura donc une efficacité maximale, mais ne sera pas sécuritaire, car il fait intervenir un trop grand nombre de composants.

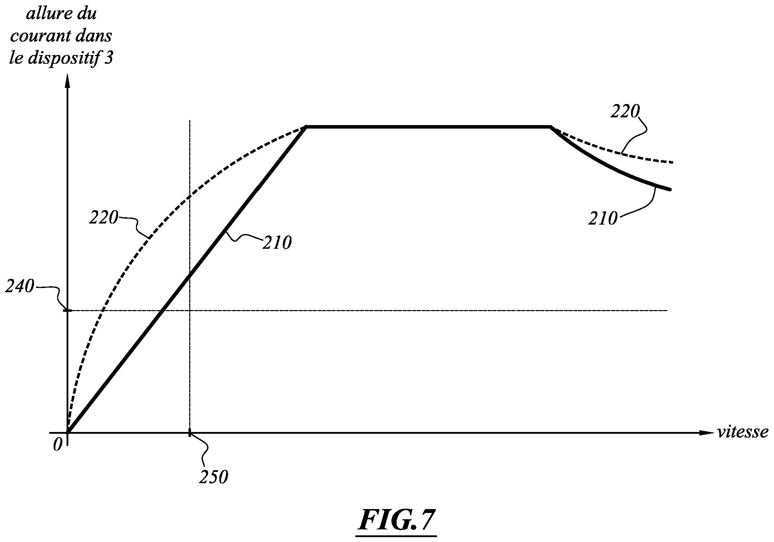

Le dispositif de détection 4 à partir du dispositif de surveillance 3 permet de savoir en sécurité si ce frein électrique a une efficacité suffisante simplement en comparant le courant passant dans ce dispositif 3 avec un seuil prédéterminé. En effet, l'effort de freinage demandé en freinage d'urgence étant constant (frein non modulable), l'évolution du courant en fonction de la vitesse du train dans ce dispositif aura approximativement la forme donnée dans la figure 7.

Le dispositif de détection 4 est donc capable de détecter en sécurité une insuffisance d'effort de freinage électrique à partir du dispositif de surveillance 3.

En cas de détection d'insuffisance d'effort de freinage électrique, le dispositif de commutation 5 est donc capable de commuter en sécurité du frein électrique 1 sur le frein sécuritaire 2. Pour cela, il envoie un ordre de commutation sur l'entrée 114 du commutateur 20 et sur l'entrée 116 du frein sécuritaire 2. Dans le cas où le mode de frein de service utilisé en frein d'urgence est le mode conjugué récupération / rhéostatique, il peut aussi envoyer un ordre d'ouverture au disjoncteur 9, de façon à garantir que l'équipement 1 ne puisse pas passer en mode traction.

En variante, il peut être prévu une temporisation de validation de la détection par le dispositif de décision, d'une durée par exemple d'une ou deux secondes, de façon à filtrer une perturbation quelconque de type fausse alarme.

En variante encore, il peut être prévu d'inactiver le dispositif de commutation au-dessous d'un seuil de vitesse prédéterminé, le dispositif de détection 4 étant alors pourvu d'une entrée, non représentée sur la figure, de signal de vitesse de train, pour éviter que même en cas de bon fonctionnement du frein de service, le dispositif bascule sur le frein de sécurité à basse vitesse. En effet, la caractéristique du courant surveillé en fonction de la vitesse (cf. figure 7) fait que ce courant passe nécessairement au-dessous du seuil de surveillance lorsque la vitesse devient très faible. Pour garder le caractère sécuritaire du dispositif, il faut que ce seuil de vitesse soit lui-même sécuritaire.

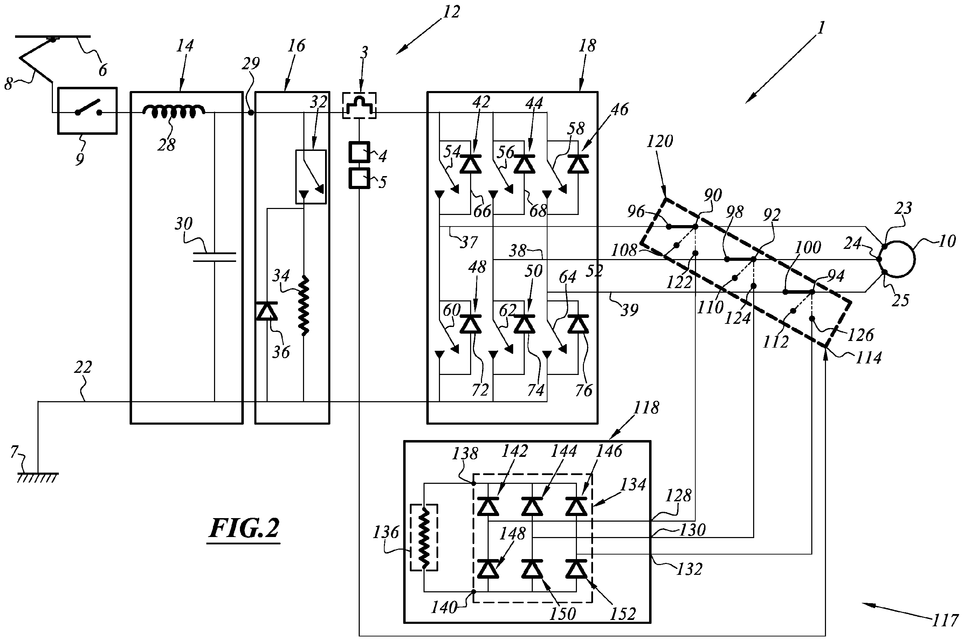

La figure 2 représente une deuxième forme de réalisation d'un système de freinage sécuritaire associé à une chaîne de traction 1 identique à celle décrite par la figure 1.

Seul diffère le frein 2, sécuritaire, qui ici est un frein électrique 117 comprenant un dispositif de production de couple de freinage 118 et le commutateur électromécanique 20 qui est ici un commutateur électromécanique 120 comprenant un troisième groupe de plots de sorties 122, 124, 126 connectés respectivement à des entrées 128, 130, 132 du dispositif de production de couple de freinage 118.

Le deuxième frein électrique 117 comprend la génératrice 10, le commutateur électromécanique 120 et le dispositif de production de couple de freinage 118.

Le commutateur électromécanique 120 est apte à déconnecter les bornes d'entrée du moteur 23, 24, 25 des lignes de sortie 37, 38, 39 de l'onduleur 18 en commutant des contacts électriques du premier groupe de plots 96, 98, 100 sur le deuxième groupe de plots de sortie 108, 110, 112 et ainsi isoler le moteur 10 de l'onduleur 18.

Le commutateur 120 est apte également à connecter les bornes d'entrée 23, 24, 25 aux entrées 128, 130, 132 du dispositif de production de couple de freinage 118 du deuxième frein 117.

Le dispositif de production de couple de freinage 118 comprend un pont redresseur à diodes 134 classique, ici triphasé, apte à être alimenté aux entrées 128, 130, 132 et une résistance de charge terminale 136 branchée sur le pont en des sorties 138 et 140. Le pont redresseur à diodes comprend ici six diodes 142, 144, 146, 148, 150, 152 représentées sur la figure 2.

Le pont redresseur à diodes 134 et la résistance de charge 136 sont tous deux des composants électriques purement passifs ne nécessitant aucune commande.

Avec le système de freinage sécuritaire décrit de la figure 2, les mêmes modes de fonctionnement que ceux de la figue 1 sont obtenus excepté pour le mode de freinage dit sécuritaire.

En mode de freinage dit sécuritaire, lorsque le dispositif de surveillance 3 et de décision 4 détecte une valeur de courant image du premier frein électrique en dessous de la valeur de seuil, une commutation du premier frein électrique sur le deuxième frein 117 est effectuée par le commutateur électromécanique 120.

Le commutateur électromécanique 120 déconnecte la machine électromécanique 10 de l'onduleur 18 lorsqu'il reçoit l'ordre de commuter sur le deuxième frein 117 depuis le dispositif d'émission 5 et connecte la génératrice 10 au dispositif de production de couple de freinage 118.

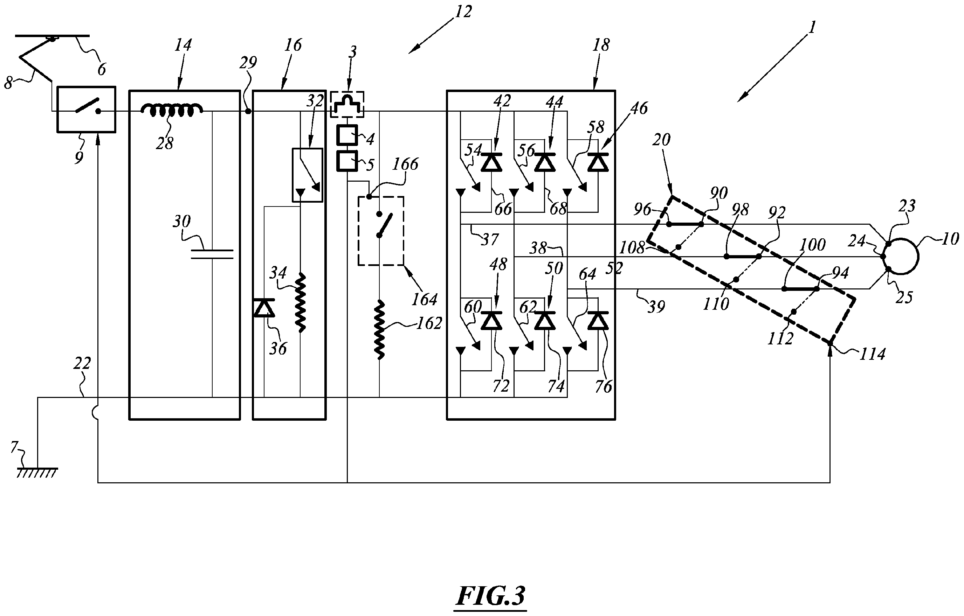

La figure 3 représente une troisième forme de réalisation d'un système de freinage sécuritaire associé à une chaîne de traction 1 identique à celle des figures 1 et 2.

Par rapport au système décrit dans la figure 1, le deuxième frein est ici un frein électrique comprenant le pont des diodes de roue libre 66, 68, 70, 72, 74, 76 de l'onduleur 18, une résistance de charge terminale 162, un relais électromécanique auxiliaire 164 connecté en série à la résistance 162 et commandé en une entrée 166, l'ensemble composé du relais 164 et de la résistance 162 étant interposé entre le hacheur 16 et l'onduleur 18.

Le deuxième frein électrique comprend également une circuiterie auxiliaire, qui n'est pas représentée ici sur la figure 3, apte à inhiber les commandes de mise en conduction des transistors de puissance de l'onduleur 18.

Le montage des dispositifs 3, 4, 5 est analogue à celui de la figure 1.

Toutefois, ici la sortie du dispositif d'émission 5 ou sortie du relais d'intensité est connectée à l'entrée 114 du commutateur électromécanique 164 de connexion de la charge 162 du deuxième frein, à la circuiterie d'inhibition des commandes de fermeture des transistors de puissance de l'onduleur 18 et, le cas échéant, à la commande d'ouverture du disjoncteur 9.

Avec le système de freinage sécuritaire décrit de la figure 3, les mêmes modes de fonctionnement que ceux de la figue 1 et 2 sont obtenus, excepté pour le mode de freinage dit sécuritaire.

Dans ce mode de freinage, les commandes des transistors de l'onduleur 18 sont inhibées en réponse à l'ordre de commutation envoyé par le dispositif d'émission 5.

La commutation sur le deuxième frein électrique est alors assurée par la fermeture du relais électromécanique auxiliaire 164 sur la résistance 162 de production de couple de freinage sécuritaire.

Des scénarios complémentaires de dissipation de l'énergie électrique dans le cas des figures 2 et 3 peuvent être prévus mais ne sont pas décrits ici.

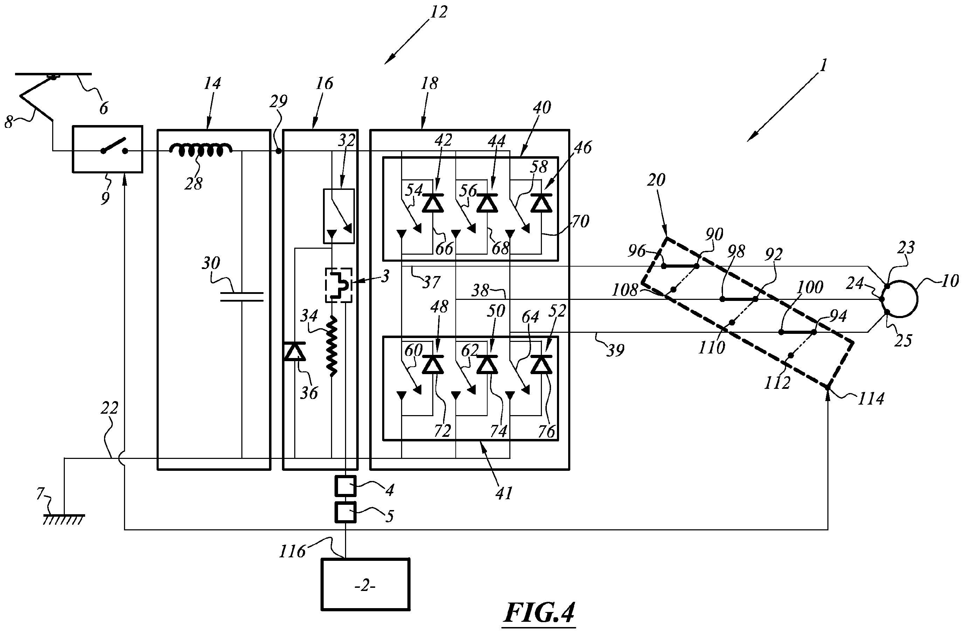

La figure 4 représente une variante de la première forme de réalisation du système de freinage sécuritaire de la figure 1, dans laquelle l'ensemble des dispositifs 3, 4, 5 est placé en série avec la résistance 34 du hacheur 16.

Le fonctionnement du système de freinage de la figure 4 est analogue à celui de la figure 1 avec la différence que le freinage de service utilisé ici pendant le freinage d'urgence est le freinage rhéostatique pur, le disjoncteur 9 étant ouvert.

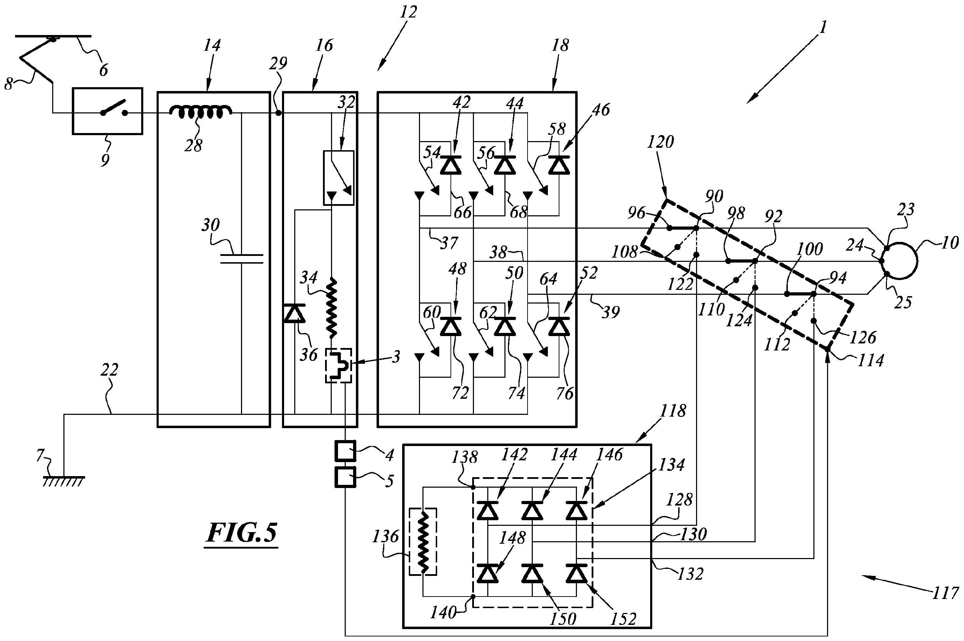

La figure 5 est une variante de la deuxième forme de réalisation du système de freinage sécuritaire de la figure 2 dans laquelle le relais d'intensité formé par 3, 4, 5 est placé en série avec la résistance 34 du hacheur 16.

Le fonctionnement du système de freinage de la figure 5 est analogue à celui de la figure 2 avec la différence qu'ici le frein de service utilisé en freinage d'urgence est le mode rhéostatique pur comme pour la figure 4.

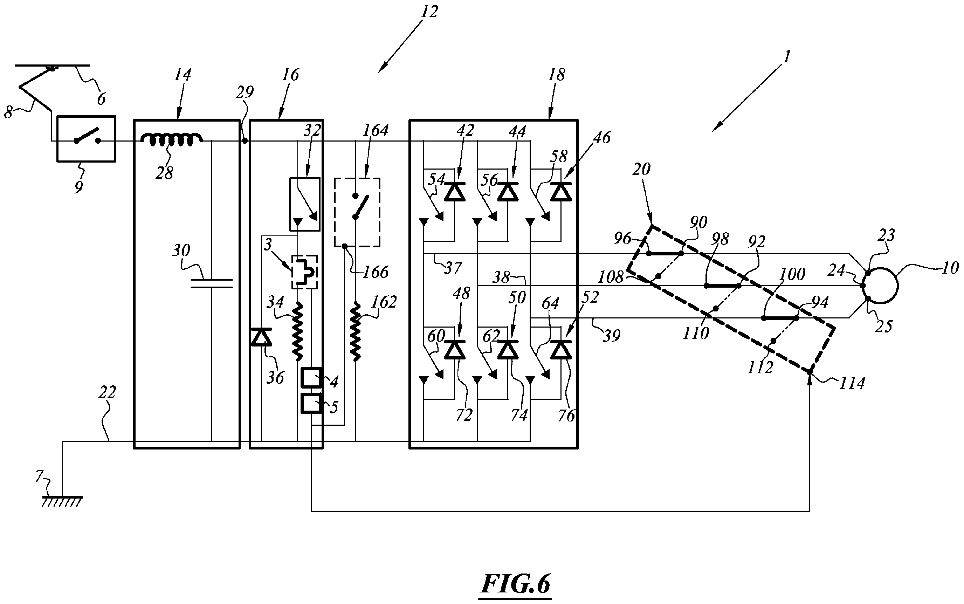

La figure 6 représente une variante de la troisième forme de réalisation du système de freinage sécuritaire de la figure 3 dans laquelle le relais d'intensité 3, 4, 5 est interposé en série avec la résistance 34 du hacheur de freinage rhéostatique 16.

Le fonctionnement du système de freinage de la figure 6 est analogue à celui de la figure 3 avec cependant la différence que le frein de service utilisé ici en freinage d'urgence est le frein rhéostatique pur comme pour les figures 4 et 5.

La figure 7 représente l'allure de l'intensité du courant passant dans le dispositif de surveillance 3 en fonction de la vitesse de rotation du moteur, c'est-à-dire de la vitesse du train en l'absence d'enrayage. Cette figure donne deux allures du courant possibles sous forme des courbes 210 et 220, selon que ce dispositif 3 est placé sur la ligne entre le hacheur rhéostatique 16 et l'onduleur 18 (cas des figures 1, 2, 3 représenté par la courbe 210) ou qu'il est placé en série avec la résistance de freinage (cas des figures 4, 5, 6 représenté par la courbe 220). Cette figure montre qu'un seuil 240 de surveillance du courant au-dessous duquel le dispositif de décision 4 détecte l'insuffisance de freinage électrique peut être choisi dans une large plage de valeurs.

Cette figure montre aussi que le courant tend vers 0 lorsque la vitesse tend vers 0. Il passera donc inévitablement au-dessous du seuil de surveillance à une certaine vitesse, assez basse. Le dispositif de détection 4 détectera donc une insuffisance de freinage électrique à basse vitesse, ce qui est tout à fait normal puisque un effort de freinage électrique ne peut jamais être totalement réalisé jusqu'à vitesse nulle. Le dispositif de commutation 5 fera donc basculer le frein sur le second frein, sécuritaire. Ceci n'est à priori pas gênant. Toutefois, on peut souhaiter l'éviter, par exemple si cette transition provoque un certain à-coup de couple de freinage (néanmoins en général acceptable, car il ne s'agit ici que du freinage d'urgence, rarement utilisé). Pour l'éviter, on peut inhiber le dispositif de détection 4 au-dessous d'un certain seuil de vitesse 250 (exemple donné sur la figure 7). Dans ce cas, il faudra bien sûr que ce seuil de vitesse soit sécuritaire, pour ne pas perdre le caractère sécuritaire du dispositif.

L'avantage procuré par le système de freinage sécuritaire décrit dans les figures 1 à 6 est le fait que le premier frein électrique de service, surveillé par le dispositif de surveillance 3 peut être utilisé dans un scénario de freinage de type sécuritaire et bénéficier dans le même temps de sa capacité de régulation du couple de freinage en fonction de la vitesse de rotation des roues.

Le système de freinage sécuritaire tel que décrit permet avantageusement :
- de profiter de toutes les possibilités de réglage dynamique du frein de service en situation d'urgence, de façon à exploiter au mieux l'adhérence roue / rail disponible,
- de moins solliciter le frein de sécurité en ne l'utilisant qu'en cas de défaillance du frein de service.

L'action conjointe des dispositifs de surveillance 3, de décision 4, d'émission d'ordre de commutation 5 et d'un deuxième frein sécuritaire 2,117 est la garantie de sécurité du système de freinage.

Avec un tel système de freinage, la régulation du couple de freinage est assurée à haute vitesse et l'encombrement du système de freinage est réduit par rapport à l'utilisation d'un freinage sécuritaire mécanique exclusivement.

D'autre part une régulation active est plus performante et moins encombrante qu'une régulation passive réalisée sur un système de freinage électrique sécuritaire de type passif.

Le deuxième frein électrique comprend également une circuiterie auxiliaire, qui n'est pas représentée ici sur la figure 3, apte à inhiber les commandes de mise en conduction des transistors de puissance de l'onduleur 18.

Le montage des dispositifs 3, 4, 5 est analogue à celui de la figure 1.

Toutefois, ici la sortie du dispositif d'émission 5 ou sortie du relais d'intensité est connectée à l'entrée 114 du commutateur électromécanique 164 de connexion de la charge 162 du deuxième frein, à la circuiterie d'inhibition des commandes de fermeture des transistors de puissance de l'onduleur 18 et, le cas échéant, à la commande d'ouverture du disjoncteur 9.

Avec le système de freinage sécuritaire décrit de la figure 3, les mêmes modes de fonctionnement que ceux de la figue 1 et 2 sont obtenus, excepté pour le mode de freinage dit sécuritaire.

Dans ce mode de freinage, les commandes des transistors de l'onduleur 18 sont inhibées en réponse à l'ordre de commutation envoyé par le dispositif d'émission 5.

La commutation sur le deuxième frein électrique est alors assurée par la fermeture du relais électromécanique auxiliaire 164 sur la résistance 162 de production de couple de freinage sécuritaire.

Des scénarios complémentaires de dissipation de l'énergie électrique dans le cas des figures 2 et 3 peuvent être prévus mais ne sont pas décrits ici.

La figure 4 représente une variante de la première forme de réalisation du système de freinage sécuritaire de la figure 1, dans laquelle l'ensemble des dispositifs 3, 4, 5 est placé en série avec la résistance 34 du hacheur 16.

Le fonctionnement du système de freinage de la figure 4 est analogue à celui de la figure 1 avec la différence que le freinage de service utilisé ici pendant le freinage d'urgence est le freinage rhéostatique pur, le disjoncteur 9 étant ouvert.

La figure 5 est une variante de la deuxième forme de réalisation du système de freinage sécuritaire de la figure 2 dans laquelle le relais d'intensité formé par 3, 4, 5 est placé en série avec la résistance 34 du hacheur 16.

Le fonctionnement du système de freinage de la figure 5 est analogue à celui de la figure 2 avec la différence qu'ici le frein de service utilisé en freinage d'urgence est le mode rhéostatique pur comme pour la figure 4.

La figure 6 représente une variante de la troisième forme de réalisation du système de freinage sécuritaire de la figure 3 dans laquelle le relais d'intensité 3, 4, 5 est interposé en série avec la résistance 34 du hacheur de freinage rhéostatique 16.

Le fonctionnement du système de freinage de la figure 6 est analogue à celui de la figure 3 avec cependant la différence que le frein de service utilisé ici en freinage d'urgence est le frein rhéostatique pur comme pour les figures 4 et 5.

La figure 7 représente l'allure de l'intensité du courant passant dans le dispositif de surveillance 3 en fonction de la vitesse de rotation du moteur, c'est-à-dire de la vitesse du train en l'absence d'enrayage. Cette figure donne deux allures du courant possibles sous forme des courbes 210 et 220, selon que ce dispositif 3 est placé sur la ligne entre le hacheur rhéostatique 16 et l'onduleur 18 (cas des figures 1, 2, 3 représenté par la courbe 210) ou qu'il est placé en série avec la résistance de freinage (cas des figures 4, 5, 6 représenté par la courbe 220). Cette figure montre qu'un seuil 240 de surveillance du courant au-dessous duquel le dispositif de décision 4 détecte l'insuffisance de freinage électrique peut être choisi dans une large plage de valeurs.

Cette figure montre aussi que le courant tend vers 0 lorsque la vitesse tend vers 0. Il passera donc inévitablement au-dessous du seuil de surveillance à une certaine vitesse, assez basse. Le dispositif de détection 4 détectera donc une insuffisance de freinage électrique à basse vitesse, ce qui est tout à fait normal puisque un effort de freinage électrique ne peut jamais être totalement réalisé jusqu'à vitesse nulle. Le dispositif de commutation 5 fera donc basculer le frein sur le second frein, sécuritaire. Ceci n'est à priori pas gênant. Toutefois, on peut souhaiter l'éviter, par exemple si cette transition provoque un certain à-coup de couple de freinage (néanmoins en général acceptable, car il ne s'agit ici que du freinage d'urgence, rarement utilisé). Pour l'éviter, on peut inhiber le dispositif de détection 4 au-dessous d'un certain seuil de vitesse 250 (exemple donné sur la figure 7). Dans ce cas, il faudra bien sûr que ce seuil de vitesse soit sécuritaire, pour ne pas perdre le caractère sécuritaire du dispositif.

L'avantage procuré par le système de freinage sécuritaire décrit dans les figures 1 à 6 est le fait que le premier frein électrique de service, surveillé par le dispositif de surveillance 3 peut être utilisé dans un scénario de freinage de type sécuritaire et bénéficier dans le même temps de sa capacité de régulation du couple de freinage en fonction de la vitesse de rotation des roues.

Le système de freinage sécuritaire tel que décrit permet avantageusement :
- de profiter de toutes les possibilités de réglage dynamique du frein de service en situation d'urgence, de façon à exploiter au mieux l'adhérence roue / rail disponible,
- de moins solliciter le frein de sécurité en ne l'utilisant qu'en cas de défaillance du frein de service.

L'action conjointe des dispositifs de surveillance 3, de décision 4, d'émission d'ordre de commutation 5 et d'un deuxième frein sécuritaire 2,117 est la garantie de sécurité du système de freinage.

Avec un tel système de freinage, la régulation du couple de freinage est assurée à haute vitesse et l'encombrement du système de freinage est réduit par rapport à l'utilisation d'un freinage sécuritaire mécanique exclusivement.

D'autre part une régulation active est plus performante et moins encombrante qu'une régulation passive réalisée sur un système de freinage électrique sécuritaire de type passif.

## Revendications

1. Système de freinage sécuritaire destiné à un véhicule de traction électrique, en particulier à un véhicule ferroviaire, équipé d'une chaîne de traction (1), le système comprenant
un premier frein électrique, non sécuritaire, intégré à la chaîne de traction (1),
un deuxième frein sécuritaire (2),
un organe de commutation (20) depuis le premier frein électrique sur le deuxième frein (2),
un dispositif de surveillance (3) apte à surveiller la performance de freinage du premier frein par des données de mesure de l'intensité d'un courant,
un dispositif de décision (4) de commuter depuis le premier frein sur le deuxième frein à partir du franchissement d'une valeur de seuil prédéterminée (240) par les données de mesure de l'intensité, et
un dispositif d'émission (5) d'un ordre de commutation à l'au moins un organe de commutation (20),
**caractérisé par** le premier frein électrique comprenant en cascade une machine électromécanique (10) apte à fonctionner en génératrice de tension, un onduleur de traction (18) apte à être configuré en pont de diodes redresseur, un commutateur électromécanique (20) de raccordement de la machine électromécanique (10) à l'onduleur (18), un hacheur (16) avec une résistance de freinage (34) de hacheur,
le commutateur électromécanique (20) formant l'organe de commutation depuis le premier frein électrique sur le deuxième frein (2).

2. Système de freinage selon la revendication 1, **caractérisé en ce que** le premier frein électrique de service comprend un filtre de ligne (14) et un disjoncteur de ligne (9).

3. Système de freinage selon l'une quelconque des revendications 1 à 2, **caractérisé en ce que** la machine électromécanique (10) comporte un rotor à aimants permanents.

4. Système de freinage selon l'une quelconque des revendications 1 à 3, **caractérisé en ce que** la machine électromécanique (10) comporte au moins deux bobinages permettant la circulation d'au moins deux courants déphasés mutuellement.

5. Système de freinage selon l'une quelconque des revendications 1 à 4, **caractérisé en ce que** le deuxième frein (2) est de type mécanique.

6. Système de freinage selon l'une quelconque des revendications 1 à 4, **caractérisé en ce que** le deuxième frein (2) est un frein électrique (117).

7. Système de freinage selon la revendication 6, **caractérisé en ce que** le deuxième frein électrique (117) comprend la machine électromécanique (10), un dispositif de production d'un couple de freinage (118), le commutateur électromécanique (120) apte à relier la machine électromécanique (10) au dispositif de production d'un couple de freinage (118).

8. Système de freinage selon la revendication 7, **caractérisé en ce que** le dispositif de production d'un couple de freinage (118) comprend un pont redresseur à diodes (134) et une résistance (136).

9. Système de freinage selon la revendication 6, **caractérisé en ce que** le deuxième frein électrique (117) comprend le pont de diodes redresseur de l'onduleur de traction (18), une résistance de charge terminale (162), un relais électromécanique auxiliaire (164) connecté en série à la résistance (162) et commandé en une entrée (166), l'ensemble composé du relais (164) et de la résistance (162) étant interposé entre le hacheur (16) et l'onduleur (18).

10. Système de freinage selon l'une quelconque des revendications 1 à 9, **caractérisé en ce que** le dispositif de surveillance (3) est monté en série avec l'onduleur (18).

11. Système de freinage selon l'une quelconque des revendications 1 à 9, **caractérisé en ce que** le dispositif de surveillance (3) est monté en série avec la résistance de freinage (34) du hacheur (16).

12. Système de freinage selon l'une quelconque des revendications 1 à 11, **caractérisé en ce que** le dispositif de surveillance (3), le dispositif de décision (4) et le dispositif d'émission (5) d'un ordre de commutation forment ensemble un relais d'intensité.

13. Système de freinage selon l'une quelconque des revendications 1 à 12, **caractérisé en ce que** la valeur de seuil (240) du dispositif de décision (4) est choisie de manière à se trouver en dessous d'une zone de valeurs d'intensité de courant sensiblement constante observé par le dispositif de surveillance (3) lorsque la vitesse de rotation de la machine électromécanique tournante (10) décroît depuis une valeur maximale, le premier frein étant actif.

14. Système de freinage selon l'une quelconque des revendications 1 à 13, **caractérisé en ce que** la décision du dispositif de décision est temporisée à partir du franchissement d'une valeur de seuil prédéterminée.

15. Système de freinage selon l'une quelconque des revendications 1 à 14, **caractérisé en ce que** la décision du dispositif de décision est inactivée quand la vitesse est inférieure à un seuil prédéterminé (250).

16. Procédé de freinage sécuritaire destiné à un véhicule de traction électrique, en particulier un véhicule ferroviaire, comprenant les étapes consistant à
activer un premier frein électrique non sécuritaire,
surveiller la performance du premier frein électrique non sécuritaire à l'aide de mesures d'au moins une variable représentative de l'effort de freinage réalisé par le premier frein électrique,
détecter le passage de cette variable en deçà d'une valeur de seuil (240), commuter le freinage du premier frein électrique non sécuritaire sur le deuxième frein (2) sécuritaire en isolant le premier frein de la machine électromécanique (10) et en activant le deuxième frein (2) sécuritaire,
le premier frein électrique comprenant en cascade une machine électromécanique (10) apte à fonctionner en génératrice de tension, un onduleur de traction (18) apte à être configuré en pont de diodes redresseur, un commutateur électromécanique (20) de raccordement de la machine électromécanique (10) à l'onduleur (18), un hacheur (16) avec une résistance de freinage (34) de hacheur,
le commutateur électromécanique (20) étant configuré pour effectuer la commutation du premier frein électrique sur le deuxième frein (2).

17. Procédé de freinage sécuritaire selon la revendication 16, **caractérisé en ce que** le deuxième frein (2) sécuritaire est un frein électrique.

## Patentansprüche

1. System zum sicheren Bremsen, vorgesehen für ein Fahrzeug mit elektrischer Traktion, insbesondere ein Schienenfahrzeug, ausgestattet mit einem Traktionsstrang (1), wobei das System aufweist
eine erste elektrische Bremse, nicht sicher, die in den Traktionsstrang (1) integriert ist,
eine zweite sichere Bremse (2),
ein Element zum Schalten (20) von der ersten elektrischen Bremse auf die zweite elektrische Bremse (2),
eine Überwachungsvorrichtung (3), geeignet zum Überwachen der Bremsleistung der ersten Bremse durch Daten der Messung der Stärke eines Stroms,
eine Entscheidungsvorrichtung (4) zum Schalten von der ersten Bremse auf die zweite Bremse ausgehend von der Überschreitung eines vorgegebenen Schwellwerts (240) durch die Daten der Messung der Stärke, und
eine Vorrichtung zum Senden (5) eines Befehls zum Schalten an mindestens ein Schaltelement (20), dadurch charakterisiert, dass
die erste elektrische Bremse in Serie eine elektromechanische Maschine (10), geeignet zum Arbeiten als Spannungsgenerator, einen Traktions-Wechselrichter (18), geeignet, als Diodengleichrichterbrücke konfiguriert zu werden, einen elektromechanischen Schalter (20) zum Verbinden der elektromechanischen Maschine (10) mit dem Wechselrichter (18) und einen Zerhacker (16) mit einem Zerhackerbremswiderstand (34), aufweist,
wobei der elektromechanische Schalter (20) das Element zum Schalten von der ersten elektrischen Bremse auf die zweite Bremse (2) bildet.

2. System zum Bremsen gemäß Anspruch 1, dadurch charakterisiert, dass die erste elektrische Betriebsbremse ein Leitungsfilter (14) und einen Leitungsunterbrecher (9) aufweist.

3. System zum Bremsen gemäß einem der Ansprüche 1 bis 2, dadurch charakterisiert, dass die elektromechanische Maschine (10) einen Rotor mit Permanentmagneten aufweist.

4. System zum Bremsen gemäß einem der Ansprüche 1 bis 3, dadurch charakterisiert, dass die elektromechanische Maschine (10) mindestens zwei Wicklungen aufweist, die das Zirkulieren von mindestens zwei gegenseitig phasenverschobenen Strömen erlauben.

5. System zum Bremsen gemäß einem der Ansprüche 1 bis 4, dadurch charakterisiert, dass die zweite Bremse (2) vom mechanischen Typ ist.

6. System zum Bremsen gemäß einem der Ansprüche 1 bis 4, dadurch charakterisiert, dass die zweite Bremse (2) eine elektrische Bremse (117) ist.

7. System zum Bremsen gemäß Anspruch 6, dadurch charakterisiert, dass die zweite elektrische Bremse (117) die elektromechanische Maschine (10) und eine Vorrichtung zum Erzeugen eines Bremsdrehmoments (118) aufweist, wobei der elektromechanische Schalter (120) dazu geeignet ist, die elektromechanische Maschine (10) mit der Vorrichtung zum Erzeugen eines Bremsdrehmoments (118) zu verbinden.

8. System zum Bremsen gemäß Anspruch 7, dadurch charakterisiert, dass die Vorrichtung zum Erzeugen eines Bremsdrehmoments (118) eine Diodengleichrichterbrücke (134) und einen Widerstand (136) aufweist.

9. System zum Bremsen gemäß Anspruch 6, dadurch charakterisiert, dass die zweite elektrische Bremse (117) die Diodengleichrichterbrücke des Traktionswechselrichters (18), einen Anschlussladewiderstand (162), ein elektromechanisches Hilfsrelais (164), das seriell zu dem Widerstand (162) geschaltet ist und an einem Eingang (166) gesteuert wird, aufweist, wobei die Anordnung, die aus dem Relais (164) und dem Widerstand (162) zusammengesetzt ist, zwischen dem Zerhacker (16) und dem Wechselrichter (18) angeordnet ist.

10. System zum Bremsen gemäß einem der Ansprüche 1 bis 9, dadurch charakterisiert, dass die Überwachungsvorrichtung (3) seriell zu dem Wechselrichter (18) montiert ist.

11. System zum Bremsen gemäß einem der Ansprüche 1 bis 9, dadurch charakterisiert, dass die Überwachungsvorrichtung (3) seriell zu dem Bremswiderstand (34) des Zerhackers (16) montiert ist.

12. System zum Bremsen gemäß einem der Ansprüche 1 bis 11, dadurch charakterisiert, dass die Überwachungsvorrichtung (3), die Entscheidungsvorrichtung (4) und die Vorrichtung zum Senden (5) eines Befehls zum Schalten zusammen ein Stromrelais bilden.

13. System zum Bremsen gemäß einem der Ansprüche 1 bis 12, dadurch charakterisiert, dass der Schwellwert (240) der Entscheidungsvorrichtung (4) derart gewählt wird, dass er sich unter einem im Wesentlichen konstanten Stromstärkewertebereich befindet, der von der Überwachungsvorrichtung (3) beobachtet wird, wenn die Rotationsgeschwindigkeit der elektromechanischen Drehmaschine (10) von einem Maximalwert abnimmt, wobei die erste Bremse aktiv ist.

14. System zum Bremsen gemäß einem der Ansprüche 1 bis 13, dadurch charakterisiert, dass die Entscheidung der Entscheidungsvorrichtung ausgehend von dem Überschreiten eines vorgegebenen Schwellwerts verzögert ist.

15. System zum Bremsen gemäß einem der Ansprüche 1 bis 14, dadurch charakterisiert, dass die Entscheidung der Entscheidungsvorrichtung deaktiviert ist, wenn die Geschwindigkeit unter einer vorgegebene Schwelle (250) ist.

16. Verfahren zum sicheren Bremsen, vorgesehen für ein Fahrzeug mit elektrischer Traktion, insbesondere ein Schienenfahrzeug, aufweisend die Schritte bestehend aus
Aktivieren einer ersten nicht-sicheren elektrischen Bremse
Überwachen der Bremsleistung der ersten nicht-sicheren Bremse mit Hilfe von Messungen mindestens einer Variablen, die repräsentativ ist für den Bremsaufwand, der durch die erste elektrische Bremse aufgebracht wird,
Detektieren des Übergangs dieser Variable unter einen Schwellwert (240),
Schalten des Bremsens von der ersten nicht-sicheren Bremse auf die zweite sichere Bremse (2) durch Isolieren der ersten Bremse der elektromechanischen Maschine (10) und durch Aktivieren der zweiten sicheren Bremse (2),
wobei die erste elektrische Bremse in Serie eine elektromechanische Maschine (10), geeignet zum Arbeiten als Spannungsgenerator, einen Traktions-Wechselrichter (18), geeignet, als Diodengleichrichterbrücke konfiguriert zu werden, einen elektromechanischen Schalter (20) zum Verbinden der elektromechanischen Maschine (10) mit dem Wechselrichter (18) und einen Zerhacker (16) mit einem Zerhackerbremswiderstand (34), aufweist,
wobei der elektromechanische Schalter (20) eingerichtet ist zum Durchführen des Schaltens von der ersten elektrischen Bremse auf die zweite Bremse (2).

17. Verfahren zum sicheren Bremsen gemäß Anspruch 16, dadurch charakterisiert, dass die zweite sichere Bremse (2) eine elektrische Bremse ist.

## Claims

1. Safety braking system intended for a vehicle with electric traction, in particular a rail vehicle, equipped with a traction chain (1), the system comprising:
a first electric non-safety brake which is integrated in the traction chain (1),
a second safety brake (2),
at least one member for commutation (20) from the first electric brake to the second brake (2),
a monitoring device (3) adapted for monitoring the braking performance of the first brake using data for measurement of the intensity of a current,
a decision device (4) for commutating from the first brake to the second brake when a predetermined threshold value is exceeded (240) by the intensity measurement data, and
a device for transmitting (5) a commutation command to the at least one commutation member (20),
**characterized by** the first electric brake comprising in sequence an electromechanical machine (10) adapted for operating as a voltage generator, a traction inverter (18) adapted for being configured as a diode bridge rectifier, an electromechanical commutator (20) for connecting the electromechanical machine (10) to the inverter (18), a chopper (16) with a chopper brake resistor (34),
the electromechanical commutator (20) forming the member for commutation from the first electric brake to the second brake (2).

2. Braking system according to claim 1, **characterized in that** the first electric service brake comprises a line filter (14) and a line circuit-breaker (9).

3. Braking system according to any one of claims 1 to 2, **characterized in that** the electromechanical machine (10) comprises a rotor with permanent magnets.

4. Braking system according to any one of claims 1 to 3, **characterized in that** the electromechanical (10) machine comprises at least two coils which allow at least two currents to flow which are mutually dephased.

5. Braking system according to any one of claims 1 to 4, **characterized in that** the second brake (2) is of the mechanical type.

6. Braking system according to any one of claims 1 to 4, **characterized in that** the second brake (2) is an electric brake (117).

7. Braking system according to claim 6, **characterized in that** the second electric brake (117) comprises the electromechanical machine (10), a braking torque production device (118), the electromechanical commutator (120) adapted for connecting the electromechanical machine (10) to the braking torque production device (118).

8. Braking system according to claim 7, **characterized in that** the braking torque production device (118) comprises a diode bridge rectifier (134) and a resistor (136).

9. Braking system according to claim 6, **characterized in that** the second electric brake (117) comprises the diode bridge rectifier of the traction inverter (18), a terminal load resistor (162), an auxiliary electromechanical relay (164) connected in series to the resistor (162) and controlled at an input (166), the assembly comprising the relay (164) and the resistor (162) being interposed between the chopper (16) and the inverter (18).

10. Braking system according to any one of claims 1 to 9, **characterized in that** the monitoring device (3) is mounted in series with the inverter (18).

11. Braking system according to any one of claims 1 to 9, **characterized in that** the monitoring device (3) is mounted in series with the brake resistor (34) of the chopper (16).

12. Braking system according to any one of claims 1 to 11, **characterized in that** the monitoring device (3), the decision device (4) and the device for transmitting (5) a commutation command together form a current relay.

13. Braking system according to any one of claims 1 to 12, **characterized in that** the threshold value (240) of the decision device (4) is selected so as to be below a substantially constant range of current intensity values observed by the monitoring device (3) when the rotation speed of the rotating electromechanical machine (10) decreases from a maximum value, the first brake being active.

14. Braking system according to any one of claims 1 to 13, **characterized in that** the decision of the decision device is delayed from the point at which a predetermined threshold value is exceeded.

15. Braking system according to any one of claims 1 to 14, **characterized in that** the decision of the decision device is deactivated when the speed is lower than a predetermined threshold (250).

16. Safety braking method intended for a vehicle with electric traction, in particular a rail vehicle, comprising the steps consisting in:
activating a first electric non-safety brake,
monitoring the performance of the first electric non-safety brake using measurements of at least one variable which is representative of the braking force produced by the first electric brake,
detecting when this variable falls below a threshold value (240),
commutating the braking of the first electric non-safety brake to the second safety brake (2) by isolating the first brake from the electromechanical machine (10) and activating the second safety brake (2),
the first electric brake comprising in sequence an electromechanical machine (10) adapted for operating as a voltage generator, a traction inverter (18) adapted for being configured as a diode bridge rectifier, an electromechanical commutator (20) for connecting the electromechanical machine (10) to the inverter (18), a chopper (16) with a chopper brake resistor (34),
the electromechanical commutator (20) being configured to carry out the commutation from the first electric brake to the second brake (2).

17. Safety braking method according to claim 16, **characterized in that** the second safety brake (2) is an electric brake.
